# EUROPÄISCHE PATENTSCHRIFT

(11) **EP 1 775 825 B1**
(45) Veröffentlichungstag und Bekanntmachung des Hinweises auf die Patenterteilung: **27.10.2010**
(21) Anmeldenummer: 06405401.8
(22) Anmeldetag: 21.09.2006
(51) Int. Cl.: H02K 15/02

(54) **Ringförmiges Blechpaket aus einem elektromagnetischen Blechband**
Annular stack of metallic laminations from an electromagnetic sheet-metal-strip
Pile annulaire de lamelles métalliques à partir d'un ruban métallique électromagnétique

(30) Priorität: 21.09.2005 CH 15392005
(43) Veröffentlichungstag der Anmeldung: 18.04.2007
(73) Patentinhaber: LCD Laser Cut AG, 5026 Densbüren (CH)
(72) Erfinder: Senn, Georg, 5026 Densbüren (CH)
(74) Vertreter: Breiter, Heinz

(56) Entgegenhaltungen:
- DE-A1- 2 150 313
- FR-A- 2 812 777
- US-A1- 2001 015 006
- US-B1- 6 630 766

## Beschreibung

### Technisches Gebiet

Die Erfindung bezieht sich auf ein Verfahren und eine Vorrichtung zur Herstellung eines im wesentlichen ringförmigen Blechpakets, insbesondere für einen Rotor und/oder einen Stator einer elektrischen Rotationsmaschine, aus einem elektromagnetischen Blechband mit an der einen Längsseite in konstantem Abstand parallel verlaufenden, identischen Zähnen, welche mit das Blechband bis auf einen im Bereich der anderen geschlossenen Längsseite angeordneten Verbindungsstegen durchgreifenden, plansymmetrischen Aussparungen alternieren, wobei ein Rollwerkzeug das strukturierte Blechband zur Bildung des ringförmigen Blechpakets zu koaxial flächig aufeinander liegenden Einzelschlaufen biegt, stapelt und nach dem Abtrennen zum Verpressen und Verbinden weitergibt, wobei ein Winkel zwischen den seitlichen Kanten der Verbindungskanäle des Blechbands beim Biegen kontinuierlich geschlossen wird, wobei die seitlichen Kanten, in Richtung von aussen nach innen, lückenlos auf Stoss aneinander gelegt werden und der betreffende Verbindungssteg zunehmend gestreckt wird. Ferner betrifft die Erfindung ein Blechband zur Herstellung eines im Wesentlichen ringförmigen Blechpakets und einen Rotor oder Stator hergestellt mit einem genannten Blechband.

### Stand der Technik

Es ist bekannt, dass Magnetkerne, beispielsweise von Generatoren und Elektromotoren, vorteilhaft nicht massiv hergestellt, sondern aus einzelnen dünnen Weicheisenblechen zusammengesetzt sind, die voneinander elektrisch isoliert sind. Die Orientierung der Blechpakete ist dabei so gewählt, dass die magnetischen Feldlinien nicht behindert werden, und Wirbelstrombahnen möglichst kurz ausfallen.

Weichmagnetische Werkstoffe werden in an sich bekannter Weise anwendungsbezogen, beispielsweise abhängig von der beabsichtigten Arbeitsfrequenz, und nach dem spezifischen elektrischen Widerstand p ausgewählt. Für Reineisen beträgt p etwa 0.13 Ωmm²/m, bei Eisen mit 3 Gew.-% Aluminium liegt p bei etwa 0.4 Ω·mm²/m.

Die in der Regel einige wenige Zehntelmillimeter dicken Bleche eines Blechpakets werden zweckmässig ausgestanzt, abgezählt, zu einem Stapel aufgeschichtet und zusammengepresst. Das Verbinden der einzelnen Bleche erfolgt durch Verschrauben, Vernieten, Löten, Schweissen, Stanzpressen und/oder Kleben. Das fertige Blechpaket präsentiert sich makroskopisch betrachtet wie ein massiver Block und ist je nach der Verbindungsart der Einzelbleche beliebig bearbeitbar, hat jedoch vorteilhaftere elektromagnetische Eigenschaften als ein massiver Magnetkern. Besonders vorteilhafte Eigenschaften haben Blechpakete aus mit einem isolierenden Backlack miteinander verbundenen Einzelblechen.

Insbesondere für Rotoren werden ringförmige Blechpakete nach aus mehreren Publikationen bekannten Verfahren hergestellt:
- Nach der DE 10013690 B4 werden im Wesentlichen bogenförmige Blechsegmente ausgestanzt, aufgestapelt und miteinander zu Blechstapelsegmenten verbunden. Die einzelnen Segmentblöcke werden zu einem ringförmigen Blechpaket zusammengefügt und miteinander verbunden.
- Die DE 2629532 C2 offenbart ein Verfahren zur Herstellung eines ringförmigen Blechpakets aus elektromagnetischem Material, nach welchem Verfahren Blechbänder mit einer Länge des Umfang des herzustellenden ringförmigen Blechpakets ausgestanzt werden. Diese ausgestanzten Bleche werden aufeinander geschichtet, miteinander verbunden und der Stapel zu einem ringförmigen Blechpaket gebogen.
- Die US 6630766 B1 beschreibt ein entsprechendes Verfahren, besondere Beachtung wird einem optimalen Magnetschluss zwischen den Segmenten geschenkt. Nach dem Biegen der Blechpakete zu einem Ring liegen die Stossflächen der Segmente mit möglichst grösserer Kontaktfläche aneinander. Die einzelnen Segmente sind durch das beim Bandstanzen übrig bleibende Material gebildet, die verbundenen Stege sind für weiche Übergänge gerundet und bilden nach dem Biegen der Blechpakete eine nach aussen überstehende Biegefalte.

Weiter ist es aus der US 6729011 B2 und der US 2004/0083598 A1 bekannt, Blechbänder mit bis auf einen Verbindungssteg ausgestanzten Hohlräumen flächig übereinander liegend spiralförmig aufzuwickeln und zu einem ringförmigen Blechpaket zu verbinden. Dabei bleibt der aussen liegende Verbindungsbereich jedoch nicht glatt in einer Ebene, sondern wird wellig bis zerknittert.

### Darstellung der Erfindung

Der Erfindung liegt die Aufgabe zugrunde, ein vereinfachtes Verfahren und eine Vorrichtung zu dessen Durchführung der eingangs genannten Art zu schaffen, bei welchen die mechanischen und elektromagnetischen Eigenschaften der ringförmigen Blechpakete wenigstens gleich gut wie bei bekannten Verfahren sind und der Bereich des Verbindungsstegs optimal glatt in einer Ebene bleibt

Bezüglich des Verfahrens nach Anspruch 1 wird die Aufgabe erfindungsgemäss dadurch gelöst, dass ein Winkel α zwischen den seitlichen Kanten der Verbindungskanäle des Blechbands beim Biegen kontinuierlich geschlossen wird, wobei die seitlichen Kanten, in Richtung von aussen nach innen, lückenlos auf Stoss aneinandergelegt werden und der betreffende Verbindungssteg zunehmend gestreckt wird. Spezielle und weiterbildende Ausführungsformen der Erfindung sind Gegenstand von abhängigen Patentansprüchen.

Mit dem erfindungsgemässen kontinuierlichen Verfahren kann nicht nur die Anzahl von Arbeitsvorgängen vermindert, sondern auch die Ausbildung von Wellen oder Knitterstellen im Bereich des Verbindungsstegs verhindert werden, weil dieser im Verlauf des Biegevorgangs kontinuierlich mehr gestreckt wird und glatt auf einer Ebene bleibt.

Das Blechband muss nicht auf den Umfang des ringförmigen Blechstapel oder eines Teils davon abgelängt werden, ebenso entfällt das stirnseitige Verbinden eines Blechpakets oder von Blechpaketsegmenten. Dadurch entfallen mögliche, durch die Verbindungstechnik bedingte magnetische Störquellen. Insbesondere wird bei einem vollständigen Formschluss der erwähnten seitlichen Kanten mit einer Einbuchtung/Ausbuchtung auch der Radius des herzustellenden ringförmigen Blechpakets exakt erreicht.

Das Verpressen und Verbinden der koaxial aufeinander liegenden, schlaufenförmigen Blechlagen erfolgt mit üblichen Vorrichtungen und Prozessen, insbesondere jedoch mittels eines ein- oder beidseitig auf das Blechband aufgetragenen Backlackes. Koaxial aufeinander gestapelt verbacken so die Einzelschlaufen zu einem Block mit regelmässiger laminarer Struktur.

Das Verfahren wird vorzugsweise mit einem strukturierten, insbesondere ausgestanzten Blechband durchgeführt, das auf der geschlossenen Längsseite mit dem Raster der Segmente ausgeformte Bogenstücke aufweist, die etwa dem Radius r der zu bildenden ringförmigen Blechpaket entsprechen.

Das für das erfindungsgemässe Verfahren eingesetzte Blechband weist auf der Aussenseite der Verbindungsstege bevorzugt eine flache runde Einbuchtung auf und bildet so eine Biegezone. Die Tiefe der Einbuchtung erstreckt sich zweckmässig über höchstens etwa 50%, insbesondere über höchstens etwa 30% der Dicke des Verbindungsstegs. Nach dem Biegen des Blechbands bestehen keine peripher überstehenden Blechfalten, was sich bei der Verwendung des ringförmigen Blechpakets vorteilhaft auswirkt.

Wie ebenfalls an sich bekannt, können die koaxial übereinander liegenden Schlaufen des Blechbandes auch durch Stanzpressen miteinander verclipt werden, beispielsweise mittels Nocken. Die zwischen den einzelnen Blechschlaufen liegende Isolierschicht kann klebend oder nicht klebend sein. Die Schichtdicke der isolierenden Klebstoff- beziehungsweise Lackschichten liegt in der Praxis bei wenigen Mikrometern, also deutlich unter der Dicke der Blechschicht.

Bezüglich der Vorrichtung nach Anspruch 9 zur Durchführung des Verfahrens wird die Aufgabe erfindungsgemäss dadurch gelöst, dass die Vorrichtung einen das ringförmige Blechpaket nach innen begrenzenden Drehzapfen, einen nach Hub und Vorschub gesteuerten Niederhalter für das Blechband, eine Mitnehmerdrehbüchse und einen Gegenhalter umfasst. Die fertigen Blechpakete mit dem aufgewickelten Blechband werden einer weiteren Vorrichtung zum Verpressen und Verbinden des schlaufenförmig gestapelten Blechbands zugeführt.

Ein wichtiger Aspekt der Erfindung liegt nicht zuletzt auch darin, ein Blechband geeignet zu strukturieren, so dass mit möglichst geringem herstellungstechnischem Aufwand ein Körper (für einen Rotor oder Stator eines Elektromotors) gerollt werden kann, welcher vorteilhafte Eigenschaften hat.

In an sich bekannter Weise hat das Blechband zur Herstellung eines im Wesentlichen ringförmigen Blechpakets Segmente, welche jeweils mindestens einen Zahn aufweisen und durch Verbindungsstege miteinander verbunden sind. An einer ersten Längsseite des Blechbandes sind Zähne in konstantem Abstand (L) parallel zueinander angeordnet und an einer zweiten Längsseite befinden sich die Verbindungsstege, so dass zwischen den Segmenten von der ersten Längsseite bis an die Verbindungsstege durchgreifende Ausschnitte mit einem Kanalbereich mit aufeinander passenden seitlichen Kanten gebildet werden. Gemäss der Erfindung hat der Kanalbereich an seinem dem Verbindungssteg zugewandten Ende einen Wippenpunkt, so dass sich die seitlichen Kanten beim Biegen des Blechbandes zwecks Herstellung des ringförmigen Blechpakets an diesem Wippenpunkt zuerst berühren und dass beim Schliessen des Kanalbereichs der Verbindungssteg infolgedessen zunehmend gestreckt wird. (Der Wippenpunkt ist nicht zwingend eine punktförmige Berührung, sondern kann auch eine etwas grössere, flächige Berührungsstelle sein. Ferner kann sich die als der Wippenpunkt dienende Berührungsstelle beim Biegen des Blechs auch verschieben.)

Vorzugsweise verläuft der Kanalbereich schräg zu der ersten Längsseite. Damit wird erreicht, dass die Unstetigkeit, welche sich beim Stoss der Blechkanten im Bereich des zusammengeschobenen Kanals im Blechstapel ergeben, dorthin verlegt werden können, wo es für den Magnetfluss weniger kritisch ist.

Typischerweise ist bei einem Rotor oder Stator die Aussparung (welche für die Drahtwicklung vorgesehen ist) im Wesentlichen rechteckig. Der Kanalbereich kann von einem Eckbereich der Aussparung ausgehend schräg in Richtung einer Mittelachse des Zahns verlaufen. Es wird dadurch ein ungefähr L-förmiges Segment gebildet. Die Unstetigkeit im magnetischen Blechstapel ist dann nicht mehr in einem Bereich, in welchem der Magnetkörper den minimalen Querschnitt hat.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die Erfindung wird anhand der in der Zeichnung dargestellten Ausführungsbeispielen, welche auch Gegenstand von abhängigen Patentansprüchen sind, näher erläutert. Es zeigen schematisch:
- Fig. 1: eine Draufsicht auf ein Rollwerkzeug für zwei ineinander gestanzte Blech- bänder,
- Fig.2: eine Ansicht eines arbeitenden Rollwerkzeugs mit einem ringförmigen Blechpaket,
- Fig. 3: eine Variante gemäss Fig. 2 mit einem fertig gefüllten und einem abge- senkten Blechpaket,
- Fig. 4: eine vergrösserte Draufsicht auf ein gestanztes Blechband,
- Fig. 5: eine Teildraufsicht auf den Verbindungsbereich zweier Segmente eines zu einer Schlaufe gebogenen Blechbands,
- Fig. 6: einen Ausschnitt eines gekrümmten Blechbands mit schräg verlaufendem Kanal in der Draufsicht.

### Wege zur Ausführung der Erfindung

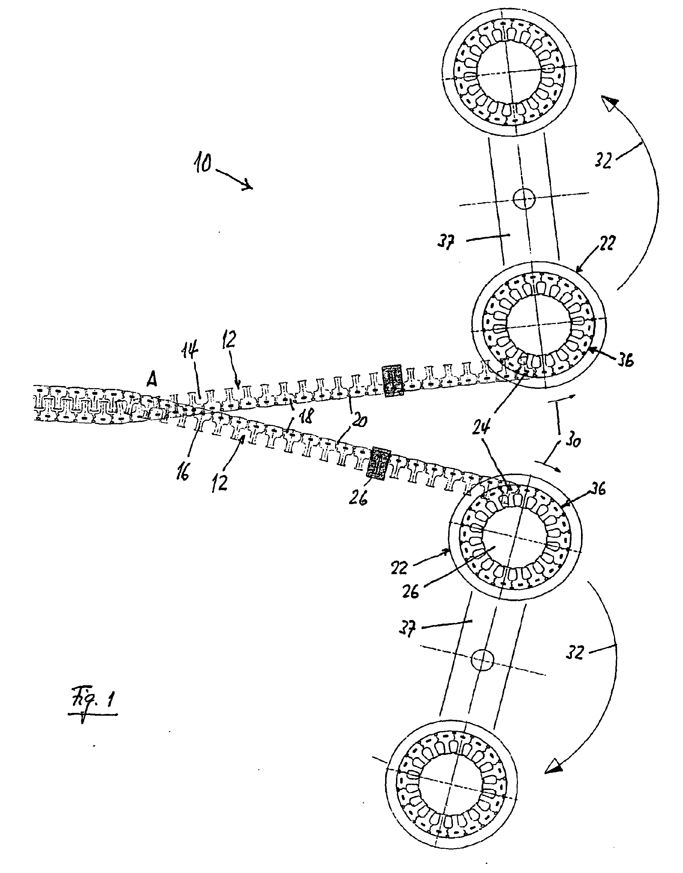

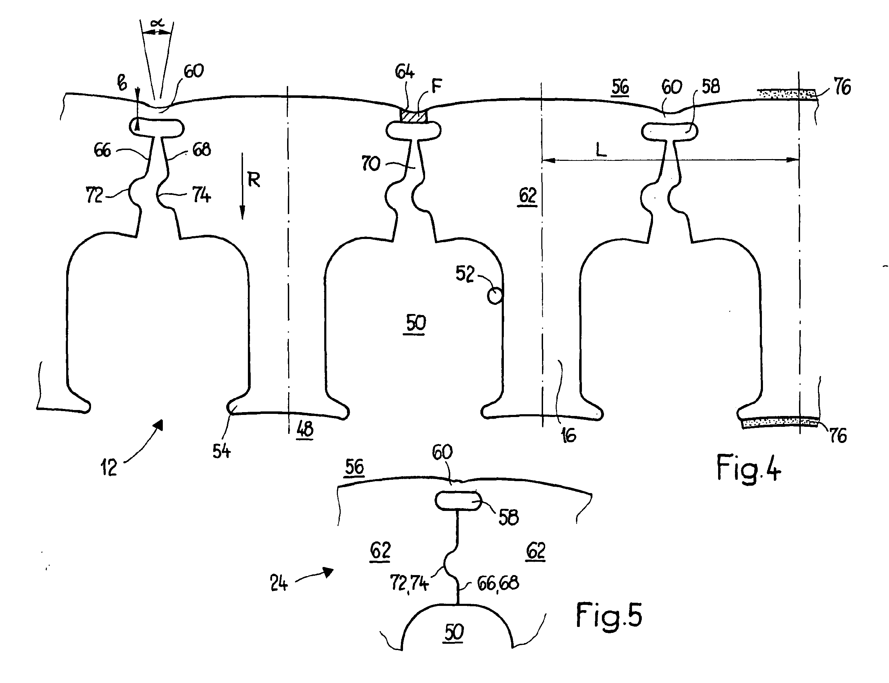

In Fig. 1 ist das Grundprinzip eines Rollwerkzeugs 10 dargestellt. Zwei Blechbänder 12 sind platzsparend ineinander gestanzt, jede Aussparung 14 des einen Bandes 12 umschliesst einen Zahn 16 des andern Bandes. Damit können die Bandabfälle optimiert werden. Den Zähnen angeformte Segmente 18 sind über einen in den Fig. 4 und Fig. 5 näher dargestellten Verbindungsbereich 20 miteinander verbunden.

In einem Bereich A werden die beiden Blechbänder 12 bezüglich der Zeichnungsebene senkrecht gegeneinander verschoben und auseinander laufend in Richtung einer Vorrichtung mit einem Rollwerkzeug 22 geführt. Dieses bildet mit Hilfe eines Drehzapfens 26 koaxial übereinander liegende Schlaufen 24 des Blechbandes 12. Diese Schlaufen 24 liegen vollflächig aufeinander. In einer Trennstation 26 wird das Band 12 abgeschnitten, sobald der ringförmige Blechstapel 36 mit den Schlaufen 24 die vorgegebene Höhe erreicht hat. Die Drehrichtung der beiden ringförmigen Blechstapel 36 ist mit Pfeilen 30 bezeichnet.

Ein voller ringförmiger Blechstapel 36 wird durch eine mit weiteren Pfeilen 32 angedeutete Rotationsbewegung entfernt und gleichzeitig ein neuer Drehzapfen 26 positioniert. Vorliegend ist die Endposition des weggeschwenkten fertigen ringförmigen Blechstapels 36 gezeichnet. Dieser kann dank eines zweiteiligen schwenkbaren Hebels ausserhalb des Arbeitsbereichs entfernt und durch einen leeren Drehzapfen 26 ersetzt werden.

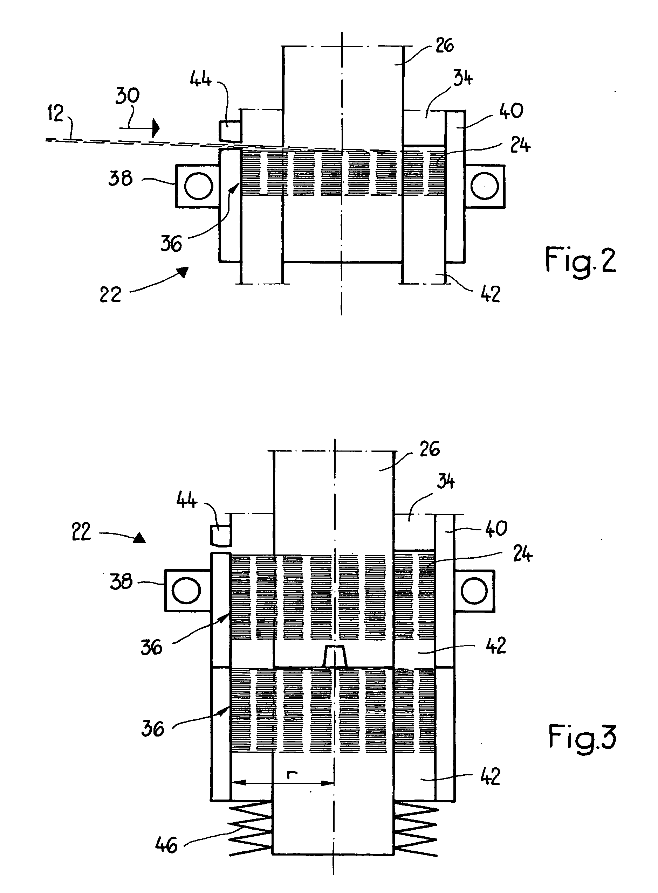

Fig. 2 zeigt ein Rollwerkzeug 22 in Arbeitsposition. Der mit nicht dargestellten maschinellen Mitteln angetriebene Drehzapfen 26 weist eine schraubenlinienförmig verlaufende Nutfräsung auf, welche als Bandführung dient. Ein nach Hub- und Vorschub gesteuerter, ringförmig ausgebildeter Niederhalter 34 führt das Blechband 12 um den Drehzapfen 26, wobei es gleichzeitig zu dem Drehzapfen 26 innenseitig anliegenden Schlaufen 24, auch Paketrollfalten genannt, gebogen wird. Dabei wird kontinuierlich ein ringförmiger Blechstapel 36 gebildet. Aussenseitig liegt dem Blechstapel 36 eine Mitnehmer- Drehbüchse 40 an, welche ihrerseits einen nach Vorschub gesteuerten Antrieb 38 aufweist. Ein gefederter Gegenhalter 42 trägt den ringförmigen Blechstapel 36 und ermöglicht eine kontinuierliche Absenkung.

In Fig. 3 sind zwei fertige ringförmige Blechstapel 36 gezeigt, welche koaxial übereinander liegen.

Der untere Blechstapel 36 wird entfernt, nach dem Absenken des oberen ringförmigen Blechstapels 36 kann die Rollarbeit wieder aufgenommen werden.

Die Federung der Gegenhalter 42 erfolgt mit Hilfe der Federn 46, vorliegend Tellerfedern im unteren Bereich.

Fig. 4 zeigt Details des gestreckten, gestanzten Blechbands 12. Auf der einen, vorliegend unteren Seite 48 des Blechbands 12 sind Aussparungen 50 ausgebildet, welche im unteren Bereich die Zähne 16 bildet. Im fertigen ringförmigen Blechpaket 36 dienen die Aussparungen 50 der Aufnahme von Drahtwicklungen 52, welche nur angedeutet sind. Diese werden gegen ein Abgleiten durch beidseitige Nasen 54 gesichert.

Die Aussparungen 50 setzten sich in Richtung der anderen, vorliegend oberen geschlossenen Längsseite 56, sich kanalförmig verengend, fort und münden in eine in Längsrichtung des Blechbandes 12 verlaufende Endöffnung 58 fort. Diese begrenzt mit der oberen Längsseite 56 einen Verbindungssteg 60, welcher verhältnismässig schmal ausgebildet ist. Diese sich vorliegend über 10 - 20% der Länge L eines Segments erstreckende Endöffnung 58 bildet die schraffiert gezeichnete flexible Zone F des Verbindungsstegs 60, welche ein problemloses Biegen des Blechbands 12 erlaubt. Der Verbindungssteg 60 weist im Bereich der Endöffnung 58 eine flache, runde Einbuchtung 64 auf, welche die flexible Zone F noch beweglicher macht. Die Tiefe der Einbuchtung 64 liegt in der Regel bei höchs-Der Verlauf der seitlichen Kanten 66, 68 der Verbindungskanäle 70 zwischen den Aussparungen 50 und den Endöffnungen 78 im Winkel α ist so vorausberechnet, dass diese Kanten 66, 68 zuerst im äussersten Bereich, also bei der Endöffnung 58, aufeinander stossen. Beim weiteren Anziehen bzw. Andrücken der Einzelschlaufe 24 schliesst der Verbindungskanal 70, auch mit einer Einbuchtung/Ausbuchtung 72/74 kontinuierlich nach innen, also in Richtung R. Beim Aufrollen des Blechbands 12 werden die Verbindungsstege 60 innerhalb des durch die Längsseiten 56 gebildeten Aussenumfangs des ringförmigen Blechpakets 36 gebogen. Beim vollständigen Aufeinander stossen der Kanten 66, 68 nach dem Biegen der Einzelschlaufen 24 mit einem Radius r (Fig. 3) liegt ein exakter Formschluss vor. Die Einzelschlaufen 24 werden durch Einbuchungen 72 in den seitlichen Kanten 66 und passende Ausbuchtungen 74 in den seitlichen Kanten 68 stabilisiert. Durch das kontinuierliche Schliessen der Verbindungskanäle 70 bis zum vollständigen Formschluss wird überdies auf die Verbindungsstege 60 durch Hebelwirkung eine zunehmende Zugkraft ausgeübt, welche die Wellenbildung oder Zerknitterung in diesem Bereich verhindert. Die Verbindungsstege 70 liegen weiterhin glatt in einer Ebene.

Ein exakter Formschluss der seitlichen Kanten 66, 68 im fertigen ringförmigen Blechstapel 36 (Fig. 3) ist mit Bezug auf den Magnetfluss von wesentlicher Bedeutung. Dieser erfolgt nur zu einem kleinen Teil durch die Verbindungsstege 60.

Beidseits des Blechbandes 12 ist eine Klebstoffschicht 76 angedeutet, welche sich über die gesamten Oberflächen 48, 56 des Blechbands 42 erstrecken. Beim Backprozess der aufeinander liegenden Schlaufen 24 (Fig. 2,3) werden die Oberflächen der Längsseiten 48, 56 fest, dauerhaft und bearbeitbar miteinander verbunden. Als Klebstoffschicht 76 besonders gut geeignet sind an sich bekannte Backlackschichten.

In Fig. 5 ist der Bereich eines Verbindungsstegs 60 einer auf einem Drehzapfen 26 gefalteten Schlaufe 24 (Fig. 2, 3) dargestellt. Die seitlichen Kanten 66, 68 mit der Ein- bzw. Ausbuchtung 72, 74 liegen auf Stoss formschlüssig exakt aufeinander und erlauben einen ungestörten Magnetfluss.

Aus Fig. 5 ist auch erkennbar, dass die gebogenen Schlaufen 24 im Bereich eines Verbindungsstegs 60 die periphere Längsseite 56 nicht überstehen, auch nicht mit Blick auf die segmentweise bogenförmige Ausführung der äusseren Oberfläche mit einem Radius r des ringförmigen Blechstapels 36 (Fig. 2,3).

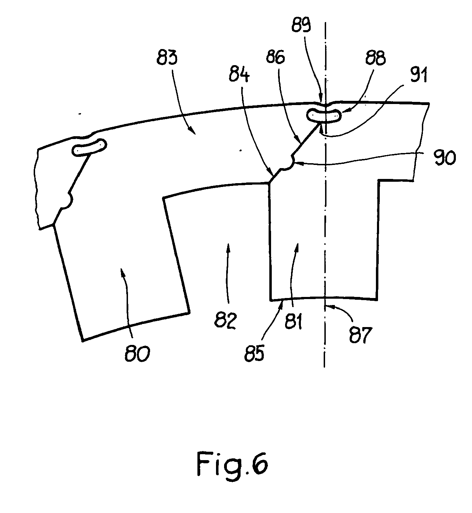

Fig. 6 zeigt einen Ausschnitt des in die gewünschte Form gebogenen Blechbandes. Zwischen zwei benachbarten L-förmigen Segmenten 80, 81 des Blechbandes ist eine ungefähr rechteckige (bzw. leicht keilförmige) Aussparung 82 gebildet. (Die Aussparung 82 ist für die Drahtwicklung des Rotors bzw. Stators bestimmt.) Der Basisteil 83 des Segments 80 bildet einen Abschnitt eines Kreisringes, wobei eine ausreichende Zahl von Basisteilen einen geschlossenen Kreisring ergeben (Zylinderkörper des Rotors bzw. Stators). An der Ecke 84, welche zwischen der (der Aussparung 82 zugewandten) Innenseite des Basisteil 83 und dem Zahn 85 des nächsten Segments 81 gebildet wird, beginnt der Kanal 86. Er verläuft schräg bezüglich der Mittelachse 87 (welche die Symmetrieachse des Zahns 85 ist) und mündet in der Öffnung 88. Die Öffnung 88, welche das Ende des Kanals 86 vom Verbindungssteg 89 trennt und für das Stanzwerkzeug zwecks Herstellung des Kanals 86 benötigt wird, liegt im vorliegenden Beispiel ebenfalls auf der Mittelachse 87. An geeigneter Stelle, z.B. in der Mitte, hat der Kanal 86 eine Passform 90 (z.B. einander entsprechende Ein- und Ausbuchtungen der Kanalkanten), wie schon in Fig. 4 und 5 erläutert.

Das erfindungsgemässe Prinzip des Spannens des Verbindungsstegs 89 beim Biegen des Blechbandes erfolgt auch beim schräg verlaufenden Kanal in praktisch gleicher Weise wie beim gerade (d.h. senkrecht zur Längsrichtung des Blechbandes) verlaufenden Kanal gemäss Fig. 4, 5. Das heisst, in einer ersten Phase wird der Verbindungssteg 89 gebogen, bis sich der Kanal 86 als erstes im Wippenpunkt 91 schliesst. Zu Beginn der nachfolgenden zweiten Phase ist öffnet sich der Kanal 86 keilförmig in Richtung der Aussparung 82. Beim weiteren Biegen des Blechbandes schliesst sich der Kanal 86 sukzessive, wobei eine Spannkraft auf den Verbindungssteg 89 ausgeübt wird, infolge der Spreizbewegung, die durch den Wippeneffekt bewirkt wird. Wenn der Kanal 86 am Ende der zweiten Phase geschlossen und die beiden Kanalkanten durch die Passform 90 exakt positioniert sind, ist der schmale Verbindungssteg 89 gedehnt bzw. gestreckt (und nicht gestaucht wie beim Stand der Technik).

Das Aufrollen des Blechbandes zu einem Stapel funktioniert in der gleichen Art wie im Zusammenhang mit den T-förmigen Segmenten der Fig. 5 erläutert.

Die Erfindung ist nicht auf die beschriebenen Ausführungsbeispiele begrenzt. Der Kanalbereich ("Fügezone") kann in unterschiedlichster Weise geformt sein. Insbesondere brauchen die Kanten des Kanals nicht gerade zu verlaufen. Der Wippenpunkt muss nicht zwingend als Ecke oder Spitze ausgebildet sein, sondern kann auch rund sein, so dass ein Abwälzen der Kanten aufeinander stattfindet.

## Patentansprüche

1. Verfahren zur Herstellung eines im wesentlichen ringförmigen Blechpakets (36), insbesondere für einen Rotor und/oder einen Stator einer elektrischen Rotationsmaschine, aus einem elektromagnetischen Blechband (12) mit an der einen Längsseite (48) in konstantem Abstand (L) parallel verlaufenden, identischen Zähnen (16), welche mit das Blechband (12) bis auf einen im Bereich der anderen, geschlossenen Längsseite (56) angeordneten Verbindungsstegen (60) durchgreifenden, plansymmetrischen Aussparungen (50) alternieren, wobei ein Rollwerkzeug (22) das strukturierte Blechband (12) zur Bildung des ringförmigen Blechpakets zu koaxial flächig aufeinander liegenden Einzelschlaufen (24) biegt, stapelt und nach dem Abtrennen zum Verpressen und Verbinden weitergibt, wobei zwischen den Aussparungen (50) und die Verbindungsstege (60) begrenzenden Endöffnungen (58) Verbindungskanäle (70) mit seitlichen Kanten (66, 68) gebildet sind, wobei ein Winkel (α) zwischen den seitlichen Kanten (66, 68) der Verbindungskanäle (70) des Blechbands (12) beim Biegen kontinuierlich geschlossen wird, wobei die seitlichen Kanten (66, 68), in Richtung (R) von aussen nach innen, lückenlos auf Stoss aneinander gelegt werden und der betreffende Verbindungssteg (60) zunehmend gestreckt wird, **dadurch gekennzeichnet, dass** das Blechband (12) eine flache, runde Einbuchtung (64) auf einer Aussenseite des Verbindungssteges (60) aufweist, wobei die Einbuchtung eine Tiefe von höchstens 50% einer Dicke des Verbindungsstegs aufweist, so dass beim Aufrollen des Blechbands (12) die Verbindungsstege (60) innerhalb eines durch die geschlossene Längsseite (56) gebildeten Aussenumfangs des ringförmigen Blechpakets (36) gebogen werden.

2. Verfahren nach Anspruch 1, **dadurch gekennzeichnet, dass** bei einem vollständigen Formschluss der seitlichen Kanten (66, 68) mit einer Einbuchtung/Ausbuchtung (72, 74) der Radius (r) des ringförmigen Blechpakets (36) exakt erreicht wird.

3. Verfahren nach Anspruch 1 oder 2, **dadurch gekennzeichnet, dass** ein Blechband (12) mit auf der geschlossenen Längsseite (56) im Raster (L) der Zähne (16) segmentweise ausgeformten Bogenstücken mit dem Radius der zu bildenden Blechpakete (36) eingesetzt wird.

4. Verfahren nach einem der Ansprüche 1 bis 3, **dadurch gekennzeichnet, dass** zwei parallel verlaufende, ineinander greifend gestanzte Blechbänder (12) getrennt und gleichzeitig auf je einen Drehzapfen (26) aufgerollt werden.

5. Verfahren nach einem der Ansprüche 1 bis 4, **dadurch gekennzeichnet, dass** ein wenigstens einseitig vollflächig mit einer elektrisch isolierenden Klebstoffschicht (76), vorzugsweise einer Backlackisolationsschicht, versehenes Blechband (12) eingesetzt wird.

6. Verfahren nach einem der Ansprüche 1 bis 5, **dadurch gekennzeichnet, dass** die Einzelschlaufen (24) des Blechbandes (12) durch Stanzpaketieren miteinander verbunden werden.

7. Verfahren nach einem der Ansprüche 1 bis 6, **dadurch gekennzeichnet, dass** beim Aufrollen des Blechbandes (12) in der inneren Hälfte der Schlaufen (24) offene Räume für eine Drahtwicklung (52) geschaffen werden.

8. Verfahren nach einem der Ansprüche 1 bis 7, **dadurch gekennzeichnet, dass** das Rollwerkzeug einen das ringförmige Blechpaket (36) nach innen begrenzenden Drehzapfen (26) mit einer schraubenlinienförmigen Nutfräsung, einen nach Hub- und Vorschub gesteuerten Niederhalter (34) für die Blechschlaufen (24), eine MitnehmerDrehbüchse (40) und einen gefederten Gegenhalter (42) umfasst.

9. Blechband (12) zur Herstellung eines im wesentlichen ringförmigen Blechpakets (36), insbesondere für einen Rotor und/oder einen Stator einer elektrischen Rotationsmaschine,
a) mit Segmenten, welche jeweils mindestens einen Zahn aufweisen und durch Verbindungsstege (60) miteinander verbunden sind,
b) wobei die Zähne (16) an einer ersten Längsseite (48) des Blechbandes in konstantem Abstand (L) parallel zueinander verlaufen und die Verbindungsstege (60) an einer zweiten Längsseite (56) des Blechbandes angeordnet sind,
c) so dass zwischen den Segmenten von der ersten Längsseite (48) bis an die Verbindungsstege (60) durchgreifende Ausschnitte (50, 70) mit einem Kanalbereich (70) mit aufeinander passenden seitlichen Kanten (66, 68) gebildet werden,
d) wobei der Kanalbereich (70) an seinem dem Verbindungssteg (60) zugewandten Ende einen Wippenpunkt aufweist, so dass sich die seitlichen Kanten (66, 68) beim Biegen des Blechbandes zwecks Herstellung des ringförmigen Blechpakets an diesem Wippenpunkt zuerst berühren und dass beim Schliessen des Kanalbereichs (70) der Verbindungssteg (60) infolgedessen zunehmend gestreckt wird,
**dadurch gekennzeichnet, dass**
e) das Blechband (12) eine flache, runde Einbuchtung (64) auf einer Aussenseite des Verbindungssteges (60) aufweist, wobei die Einbuchtung eine Tiefe von höchstens 50% einer Dicke des Verbindungsstegs aufweist, so dass beim Aufrollen des Blechbands (12) die Verbindungsstege (60) innerhalb eines durch die geschlossene Längsseite (56) gebildeten Aussenumfangs des ringförmigen Blechpakets (36) gebogen werden können.

10. Blechband nach Anspruch 9, **dadurch gekennzeichnet, dass** der Kanalbereich (70) schräg zu der ersten Längsseite (48) verläuft.

11. Blechband nach Anspruch 9 oder 10, **dadurch gekennzeichnet, dass** die Aussparung im Wesentlichen rechteckig ist und dass der Kanalbereich von einem Eckbereich der Aussparung ausgehend schräg in Richtung einer Mittelachse des Zahns verläuft, so dass das Segment L-förmig ausgebildet ist.

12. Rotor oder Stator hergestellt mit dem Blechband nach einem der Ansprüche 9-11.

## Claims

1. Method for producing a substantially annular laminated core (36), in particular for a rotor and/or a stator of an electrical rotating machine, from an electromagnetic sheet-metal strip (12) having identical teeth (16), which extend in parallel with a constant spacing (L) on one longitudinal side (48) and alternate with planar symmetrical recesses (50) which pass through the sheet-metal strip (12) up to connection webs (60) arranged in the region of the other, closed longitudinal side (56), wherein a rolling tool (22) bends the structured sheet-metal strip (12) to form the annular laminated core into individual loops (24) lying coaxially one on top of another in sheet-like form, stacks the latter and, after they have been separated, feeds them on for pressing and joining, wherein connection channels (70) with lateral edges (66, 68) are formed between the recesses (50) and end openings (58) which delimit the connection webs (60), wherein an angle (α) between the lateral edges (66, 68) of the connection channels (70) of the sheet-metal strip (12) is closed continuously during the bending, wherein the lateral edges (66, 68) are placed one against the other end to end, without any gaps, in the direction (R) from the outside inwards, and the connection web (60) in question is increasingly stretched, **characterized in that** the sheet-metal strip (12) has a flat, round indentation (64) on an outer side of the connection web (60), wherein the indentation has a depth measuring at most 50% of a thickness of the connection web, such that, as the sheet-metal strip (12) is being rolled up, the connection webs (60) are bent within an outer circumference, formed by the closed longitudinal side (56), of the annular laminated core (36).

2. Method according to Claim 1, **characterized in that** the radius (r) of the annular laminated core (36) is accurately achieved if there is a complete positive lock between the lateral edges (66, 68) and an indentation/bulge (72, 74).

3. Method according to Claim 1 or 2, **characterized in that** use is made of a sheet-metal strip (12) having arcuate pieces, which are formed in segments on the closed longitudinal side (56) in the pitch (L) of the teeth (16) and have the radius of the laminated cores (36) to be formed.

4. Method according to one of Claims 1 to 3, **characterized in that** two sheet-metal strips (12), which extend in parallel and have been stamped so as to engage one into the other, are separated and simultaneously each rolled up on a pivot pin (26).

5. Method according to one of Claims 1 to 4, **characterized in that** use is made of a sheet-metal strip (12) provided over the entire surface of at least one side with an electrically insulating layer of adhesive (76), preferably an insulating layer of baking enamel.

6. Method according to one of Claims 1 to 5, **characterized in that** the individual loops (24) of the sheet-metal strip (12) are joined together by pack-stacked stamping.

7. Method according to one of Claims 1 to 6, **characterized in that** open spaces are created for a wire winding (52) in the inner half of the loops (24) as the sheet-metal strip (12) is being rolled up.

8. Method according to one of Claims 1 to 7, **characterized in that** the rolling tool comprises a pivot pin (26), which inwardly delimits the annular laminated core (36) and has a helical grooving, a hold-down device (34) controlled in terms of lift and advance for the sheet-metal loops (24), a driving rotary bushing (40) and a spring-loaded counterstay (42).

9. Sheet-metal strip (12) for producing a substantially annular laminated core (36), in particular for a rotor and/or a stator of an electrical rotating machine,
a) having segments, which each have at least one tooth and are joined together by connection webs (60),
b) wherein the teeth (16) extend parallel to one another with a constant spacing (L) on a first longitudinal side (48) of the sheet-metal strip, and the connection webs (60) are arranged on a second longitudinal side (56) of the sheet-metal strip,
c) such that cutouts (50, 70) which pass through from the first longitudinal side (48) up to the connection webs (60) and have a channel region (70) with matching lateral edges (66, 68) are formed between the segments,
d) wherein that end of the channel region (70) which faces towards the connection web (60) has a tilting point, such that the lateral edges (66, 68) first make contact at this tilting point when the sheet-metal strip is being bent in order to produce the annular laminated core, and that the connection web (60) is consequently increasingly stretched as the channel region (70) is being closed,
**characterized in that**
e) the sheet-metal strip (12) has a flat, round indentation (64) on an outer side of the connection web (60), wherein the indentation has a depth measuring at most 50% of a thickness of the connection web, such that, as the sheet-metal strip (12) is being rolled up, the connection webs (60) can be bent within an outer circumference, formed by the closed longitudinal side (56), of the annular laminated core (36).

10. Sheet-metal strip according to Claim 9, **characterized in that** the channel region (70) extends obliquely in relation to the first longitudinal side (48).

11. Sheet-metal strip according to Claim 9 or 10, **characterized in that** the recess is substantially rectangular, and **in that** the channel region extends, starting from a corner region of the recess, obliquely in the direction of a centre line of the tooth, such that the segment has an L-shaped form.

12. Rotor or stator produced using the sheet-metal strip according to one of Claims 9-11.

## Revendications

1. Procédé de fabrication d'un paquet de tôles (36) sensiblement annulaire, notamment pour un rotor et/ou pour un stator d'une rotative électrique, à partir d'une bande de tôle électromagnétique (12) avec des dents (16) identiques s'étendant en parallèle avec un écart constant (L) sur l'un des côtés longitudinaux (48), lesquelles dents alternent avec des évidements (50) disposés en symétrie plane, traversant la bande de tôle (12) jusqu'à des listels de liaison (60) disposés dans la zone de l'autre côté longitudinal (56) fermé, un outillage de roulage (22) cintrant la bande de tôle (12) structurée pour former le paquet de tôles annulaire en boucles individuelles (24) placées en direction coaxiale en nappe les unes sur les autres, les empilant et après leur séparation, les transférant pour les comprimer et les relier, des canaux de liaison (70) avec des arêtes latérales (66, 68) étant formés entre les évidements (50) et des orifices d'extrémité (58) délimitant les listels de liaison (60), un angle (α) étant fermé en permanence lors du cintrage entre les arêtes latérales (66, 68) des canaux de liaison (70) de la bande de tôle (12), les arêtes latérales (66, 68) étant posées l'une contre l'autre, sans intervalle, bout à bout, en direction (R) de l'extérieur vers l'intérieur et le listel de liaison (60) concerné étant étiré de plus en plus, **caractérisé en ce que** la bande de tôle (12) comporte sur une face extérieure du listel de liaison (60) un creux plat rond (64), le creux présentant une profondeur d'un maximum de 50% d'une épaisseur du listel de liaison, de sorte que lors de l'enroulement de la bande de tôle (12) les listels de liaison (60) soient cintrés à l'intérieur d'une périphérie extérieure formée par le côté longitudinal fermé (56) du paquet de tôles annulaire (36).

2. Procédé selon la revendication 1, **caractérisé en ce que** lors d'une complémentarité de forme totale des arêtes latérales (66, 68) avec un creux/une bosse (72, 74), le rayon (r) du paquet de tôles annulaire (36) est exactement atteint.

3. Procédé selon la revendication 1 ou 2, **caractérisé en ce qu'**on met en oeuvre une bande de tôle (12) avec des raccords courbés rapportés en segments sur le côté longitudinal (56) fermé dans la trame (L) des dents (16) avec le rayon du paquet de tôles (36) à former.

4. Procédé selon l'une quelconque des revendications 1 à 3, **caractérisé en ce qu'**on sépare deux bandes de tôle (12) s'étendant en parallèle, estampées en s'engageant mutuellement et **en ce qu'**on les enroule simultanément chacune sur un tourillon (26).

5. Procédé selon l'une quelconque des revendications 1 à 4, **caractérisé en ce qu'**on met en oeuvre une bande de tôle (12) munie au moins sur une face sur toute la surface d'une couche d'adhésif (76) isolant électriquement, de préférence d'une couche d'isolation backlack.

6. Procédé selon l'une quelconque des revendications 1 à 5, **caractérisé en ce qu'**on relie l'une à l'autre les boucles individuelles (24) de la bande de tôle (12) par formation de paquets par poinçonnage.

7. Procédé selon l'une quelconque des revendications 1 à 6, **caractérisé en ce que** lors de l'enroulement de la bande de tôle (12), on ménage dans la moitié intérieure des boucles (24) des espaces ouverts pour un enroulement de fils (52).

8. Procédé selon l'une quelconque des revendications 1 à 7, **caractérisé en ce que** l'outillage de roulage comprend un tourillon (26) délimitant vers l'intérieur le paquet de tôles annulaire (36) avec un rainurage hélicoïdal, un serre-flan (34) commandé par levée et avance pour les boucles de tôle (24), un coussinet rotatif d'entraînement (40) et une contre-bouterolle sur ressort (42).

9. Bande de tôle (12) pour la fabrication d'un paquet de tôles (36) sensiblement annulaire, notamment pour un rotor et/ou un stator d'une rotative électrique,
a) avec des segments qui comportent chacun au moins une dent et qui sont reliés les uns aux autres par des listels de liaison (60),
b) sur un premier côté longitudinal (48) de la bande de tôle, les dents (16) s'étendant en parallèle les unes par rapport aux autres avec un écart constant (L) et les listels de liaison (60) étant disposés sur un deuxième côté longitudinal (56) de la bande de tôle,
c) de telle sorte, que des découpes (50, 70) traversantes soient formées entre les segments depuis le premier côté longitudinal (48) jusqu'aux listels de liaison (60) avec une zone de canaux (70) avec des arêtes latérales (66, 68) coïncidentes,
d) la zone de canaux (70) comportant sur son extrémité dirigée vers le listel de liaison (60) un point de bascule, de sorte qu'au cintrage de la bande de tôle à des fins de fabrication du paquet de tôles annulaire, les arêtes latérales (66, 68) entrent d'abord en contact mutuel sur ce point de bascule, et de sorte qu' à la fermeture de la zone de canaux (70) le listel de liaison (60) soit par conséquent de plus en plus étiré,
**caractérisée en ce que**,
e) la bande de tôle (12) comporte sur une face extérieure du listel de liaison (60) un creux plat rond (64), le creux présentant une profondeur d'un maximum de 50% de l'épaisseur du listel de liaison, de sorte que lors de l'enroulement de la bande de tôle (12), les listels de liaison (60) puissent être cintrés à l'intérieur d'une périphérie extérieure formée par le côté longitudinal fermé (56) du paquet de tôles annulaire (36).

10. Bande de tôle selon la revendication 9, **caractérisée en ce que** la zone de canaux (70) s'étend obliquement par rapport au premier côté longitudinal (48).

11. Bande de tôle selon la revendication 9 ou 10, **caractérisée en ce que** l'évidement est sensiblement rectangulaire et **en ce qu'**à partir d'une zone angulaire de l'évidement, la zone de canaux s'étend obliquement en direction d'un axe central de la dent, de sorte que le segment soit conçu en forme de L.

12. Rotor ou stator fabriqué avec la bande de tôle selon l'une quelconque des revendications 9 à 11.
